# EUROPEAN PATENT APPLICATION

(11) **EP 4 796 863 A1**
(43) Date of publication of application: **26.08.2026**
(21) Application number: 24878948.9
(22) Date of filing: 14.10.2024
(51) Int. Cl.: F24F 13/22, F24F 13/02, F24F 13/20, F24F 13/30, F24F 13/28, F24F 11/89, F24F 11/88, F24F 7/003, F24F 8/108, F24F 8/90, F24F 6/04, F24F 8/50, F24F 1/0063, F24F 1/16, F25B 41/40, F25B 41/30

(54) **LIQUID WATER SOURCE COLLECTION APPARATUS, AIR CONDITIONER, CONTROL METHOD AND RELATED APPARATUS**

(30) Priority: 16.10.2023 CN 202311349711
(71) Applicant: Shenzhen Roborock Innovation Technology Co., Ltd., Shenzhen, Guangdong 518000 (CN)
(72) Inventor: LI, Xing, Shenzhen, Guangdong 518000 (CN); WANG, Zhe, Shenzhen, Guangdong 518000 (CN); MI, Chang, Shenzhen, Guangdong 518000 (CN); XING, Siwei, Shenzhen, Guangdong 518000 (CN)
(74) Representative: Maiwald GmbH
(86) International application number: PCT/CN2024/124655
(87) International publication number: WO 2025/082304

(57) **Abstract**

Embodiments of the present application relate to the technical field of temperature regulation devices. Disclosed are a liquid water source collection apparatus, an air conditioner, a control method and a related apparatus. The liquid water source collection apparatus comprises a liquid enrichment assembly, a liquid collection assembly, a condensation assembly and a pipeline assembly; during use, an enrichment part of the liquid enrichment assembly can capture water vapor or steam in air, and then the enriched water vapor and steam are released by means of a regeneration part, such that the liquid collection assembly can collect liquid water; external air can also be introduced into the condensation assembly, the air is subjected to heat exchange with the condensation assembly having the relatively low temperature, and water vapor in the air is condensed at a low temperature to form condensate or frost; external air can also be firstly introduced into the liquid enrichment assembly, the liquid enrichment assembly enriches water vapor, then the water content of the air discharged by the liquid enrichment assembly is increased, and this part of air can be discharged into the condensation assembly to be condensed again; and the liquid water generation efficiency is higher.

## Description

The present disclosure claims priority to Chinese Patent Application No. 202311349711.5, filed with the China National Intellectual Property Administration on October 16, 2023, and entitled "LIQUID WATER SOURCE COLLECTION APPARATUS, AIR CONDITIONER, CONTROL METHOD AND RELATED APPARATUS", the content of which is incorporated herein by reference in its entirety.

### TECHNICAL FIELD

Embodiments of the present disclosure relate to the technical field of temperature regulation equipment, and in particular, relate to a liquid water source collection apparatus, an air conditioner, a control method, and a related apparatus.

### BACKGROUND ART

In the use of some air conditioning devices in conventional technology, liquid water is required; for example, an air conditioner needs to use water to regulate the humidity of air or perform cleaning. The inventor realized that most water supply methods in conventional technology involve providing a water tank inside the air conditioner and replenishing water for the air conditioner by a user filling water into the water tank, which increases the operation workload of the user; moreover, the user is prone to forgetting to replenish water, rendering some functions of the air conditioner unusable.

### SUMMARY OF THE INVENTION

The present disclosure aims to solve at least one of the technical problems existing in the prior art or the related art.

Therefore, a first aspect of the present disclosure provides a liquid water source collection apparatus.

A second aspect of the present disclosure provides an air conditioner.

A third aspect of the present disclosure provides a control method.

A fourth aspect of the present disclosure provides a computer-readable storage medium.

A fifth aspect of the present disclosure provides a control apparatus.

In view of this, according to a first aspect of embodiments of the present disclosure, a liquid water source collection apparatus is provided. The liquid water source collection apparatus includes:
a liquid enrichment assembly, the liquid enrichment assembly including an enrichment part and a regeneration part;
a condensation assembly and a pipeline assembly, the pipeline assembly connecting the liquid enrichment assembly and the condensation assembly; and
a liquid collection assembly, the liquid collection assembly being in communication with the condensation assembly and/or the liquid enrichment assembly.

In one feasible embodiment, the pipeline assembly includes:
an input pipeline in communication with the liquid enrichment assembly and disposed upstream of an airflow of the enrichment part;
an output pipeline in communication with the liquid enrichment assembly and disposed downstream of the airflow of the enrichment part;
a moisture intake pipeline in communication with the condensation assembly and disposed upstream of an airflow of the regeneration part;
a moisture release pipeline, one end of the moisture release pipeline being in communication with the liquid enrichment assembly and disposed downstream of the airflow of the regeneration part, and the other end of the moisture release pipeline being in communication with the condensation assembly;
a first control valve, the first control valve being configured to communicate the input pipeline with the moisture release pipeline; and
a second control valve, the second control valve being configured to communicate the output pipeline with the moisture intake pipeline.

In one feasible embodiment, the liquid enrichment assembly further includes:
a first air supply member disposed within the input pipeline and/or the output pipeline and configured to cause air to flow through the enrichment part of the liquid enrichment assembly; and
a second air supply member disposed within the moisture intake pipeline and/or the moisture release pipeline and configured to cause air to flow through the regeneration part of the liquid enrichment assembly.

In one feasible embodiment, the first control valve is further configured to adjust an opening degree between the input pipeline and the moisture release pipeline; and
the second control valve is further configured to adjust an opening degree between the output pipeline and the moisture intake pipeline.

In one feasible embodiment, the liquid enrichment assembly includes:
a first housing, with the enrichment part and the regeneration part formed on the first housing;
a moisture adsorption member disposed within the first housing;
an enrichment member, the enrichment member being configured to prompt the moisture adsorption member to capture water molecules in air; and
a regeneration member configured to supply energy to the regeneration part to desorb water molecules.

In one feasible embodiment, the liquid enrichment assembly includes: an enrichment member configured to supply energy to the enrichment part; the enrichment member includes at least one of a phase change heat exchanger, a Peltier effect heat exchanger, a fan, a liquid cooling heat exchanger, and a vortex tube; and/or
the regeneration member includes at least one of: thermal radiation, a hot end of a heat pump, a hot end of a heat pipe, and a solar heat source; and/or the liquid enrichment assembly further includes:
a driving member connected to the moisture adsorption member and configured to drive the moisture adsorption member to rotate.

In one feasible embodiment, the liquid collection assembly is configured to be connected to a water-using apparatus, and the water-using apparatus includes a humidification component and/or a cleaning component.

In one feasible embodiment, the condensation assembly includes:
a liquid collection heat exchanger, the liquid collection heat exchanger being configured to form condensed water and/or frost, and the liquid collection assembly collects, through an input end, the condensed water and/or liquid formed by melting of the frost.

In one feasible embodiment, the condensation assembly further includes:
a second housing, the liquid collection heat exchanger being disposed within the second housing, the second housing being configured to collect the condensed water and/or the liquid formed by the melting of the frost, the input end of the liquid collection assembly being in communication with the second housing, and the pipeline assembly being in communication with the second housing.

According to a fourth aspect of the embodiments of the present disclosure, an air conditioner is provided. The air conditioner includes:
the liquid water source collection apparatus according to any one of the above technical solutions.

In one feasible embodiment, the air conditioner further includes:
an indoor heat exchanger;
a compressor, the compressor being connected to the indoor heat exchanger;
an outdoor heat exchanger, the outdoor heat exchanger being connected to the compressor;
a first throttling assembly, the throttling assembly being separately connected to the outdoor heat exchanger and the indoor heat exchanger; and
a first refrigerant pipeline, the refrigerant pipeline being in communication with the indoor heat exchanger, the compressor, the outdoor heat exchanger, and the first throttling assembly to form a refrigerant circulation.

In one feasible embodiment, the pipeline assembly is in communication with at least one of the indoor heat exchanger and the outdoor heat exchanger, and at least one of the indoor heat exchanger and the outdoor heat exchanger serves as a liquid collection heat exchanger of the condensation assembly; and
in the case where the pipeline assembly is in communication with the outdoor heat exchanger and the indoor heat exchanger, the liquid collection assembly includes a first water tank and a second water tank, the first water tank is in communication with the outdoor heat exchanger, and the second water tank is in communication with the indoor heat exchanger.

In one feasible embodiment, the air conditioner further includes:
a second refrigerant pipeline, the second refrigerant pipeline being in communication with the condensation assembly, one end of the second refrigerant pipeline being in communication with the indoor heat exchanger, and the other end of the second refrigerant pipeline being in communication with the compressor, such that the liquid collection heat exchanger of the condensation assembly is connected in parallel with the outdoor heat exchanger;
a second throttling assembly, the second throttling assembly being separately connected to the indoor heat exchanger and the liquid collection heat exchanger; and/or,
a third air supply member, the third air supply member being configured to supply air to the condensation assembly.

In one feasible embodiment, the air conditioner further includes:
a third refrigerant pipeline, the third refrigerant pipeline being in communication with the condensation assembly, one end of the third refrigerant pipeline being in communication with the first throttling assembly, and the other end of the third refrigerant pipeline being in communication with the indoor heat exchanger;
a third control valve, the third control valve being disposed on the third refrigerant pipeline; and/or
a fourth air supply member, the fourth air supply member being configured to supply air to the liquid collection heat exchanger of the condensation assembly.

In one feasible embodiment, the air conditioner further includes:
a third housing, the outdoor heat exchanger, the compressor, and the liquid collection assembly being disposed within the third housing.

In one feasible embodiment, the air conditioner further includes:
a humidifier, the liquid collection assembly being in communication with the humidifier,
where the humidifier includes a curtain body, and the liquid collection assembly is configured to output liquid to the curtain body.

In one feasible embodiment, the air conditioner further includes:
an outdoor unit housing, the liquid enrichment assembly and the outdoor heat exchanger being disposed within the outdoor unit housing;
an indoor unit housing, the indoor heat exchanger being disposed within the indoor unit housing; and
a fresh air module, an air intake port of the fresh air module being in communication with a first air inlet of the outdoor unit housing, and an output end of the fresh air module being connected to a second air inlet of the indoor unit housing.

In one feasible embodiment, the fresh air module further includes:
an oxygen production module and an absorption module, the oxygen production module and the absorption module being disposed within a housing of the fresh air module.

In one feasible embodiment, the air conditioner further includes:
a filter module, the filter module being configured to filter air entering at least one of the liquid water source collection apparatus, the outdoor unit housing, and the indoor unit housing; and
a cleaning module, an output end of the liquid collection assembly being in communication with the cleaning module, and the cleaning module being configured to clean the filter module.

In one feasible embodiment, the filter module includes:
a first filter member configured to be disposed at the air inlet of the outdoor unit housing;
a second filter member configured to be disposed at an air inlet of the fresh air module; or
a third filter member configured to cover both the fresh air module and the first air inlet of the outdoor unit housing.

In one feasible embodiment, the filter module further includes:
a fourth filter member configured to be disposed at the air inlet of the indoor unit housing; and
fifth filter members configured to be disposed at inlets of the moisture intake pipeline and the moisture release pipeline of the pipeline assembly; and
the cleaning module is configured to clean at least one of the first filter member, the second filter member, the third filter member, the fourth filter member, and the fifth filter member.

According to a third aspect of the embodiments of the present disclosure, a control method is provided. The control method is used to control the air conditioner according to any one of the above technical solutions, and the control method includes:
adjusting a conduction mode of the pipeline assembly to enrich liquid water only by a liquid enrichment assembly in response to a first water collection instruction;
adjusting the conduction mode of the pipeline assembly to enrich the liquid water only by a condensation assembly in response to a second water collection instruction; and
adjusting the conduction mode of the pipeline assembly to enrich the liquid water by the liquid enrichment assembly and the condensation assembly in response to a third water collection instruction.

In one feasible embodiment, the step of adjusting the conduction mode of the pipeline assembly to enrich the liquid water only by the liquid enrichment assembly in response to the first water collection instruction includes:
controlling a first control valve of the pipeline assembly to disconnect a path between an input pipeline and a moisture release pipeline, controlling a second control valve of the pipeline assembly to disconnect a path between an output pipeline and a moisture intake pipeline, and controlling the input pipeline and the output pipeline to open, such that the liquid enrichment assembly enriches water molecules; and
controlling the moisture intake pipeline and the moisture release pipeline of the pipeline assembly to open, such that the liquid water is collected into the liquid collection assembly.

In one feasible embodiment, the step of adjusting the conduction mode of the pipeline assembly to enrich the liquid water only by the condensation assembly in response to the second water collection instruction includes:
in response to the second water collection instruction, controlling a first control valve of the pipeline assembly to open a path between an input pipeline and a moisture release pipeline, controlling a second control valve of the pipeline assembly to open a path between an output pipeline and a moisture intake pipeline, and controlling a heat exchanger in communication with the liquid collection assembly to serve as an evaporator to form condensed water and/or frost; and
collecting, by the liquid collection assembly, the condensed water and/or water resulting from melting of the frost.

In one feasible embodiment, the step of adjusting the conduction mode of the pipeline assembly to enrich the liquid water by the liquid enrichment assembly and the condensation assembly in response to the third water collection instruction includes:
in response to the third water collection instruction, controlling, by a first control valve of the pipeline assembly, an input pipeline to be connected to both an output pipeline and a moisture release pipeline, and controlling, by a second control valve of the pipeline assembly, the output pipeline to be connected to both the input pipeline and a moisture intake pipeline;
controlling a heat exchanger in communication with the liquid collection assembly to serve as an evaporator to form condensed water and/or frost, and enriching water molecules by the liquid enrichment assembly; and
collecting the condensed water, water resulting from melting of the frost, and regenerated water from the liquid enrichment assembly by the liquid collection assembly.

In one feasible embodiment, the step of collecting the condensed water, the water resulting from the melting of the frost, and the regenerated water from the liquid enrichment assembly by the liquid collection assembly includes:
upon formation of the frost on the evaporator, controlling controlling the first control valve to disconnect a path between the input pipeline and the moisture release pipeline, and controlling the second control valve to disconnect a path between the output pipeline and the moisture intake pipeline, and defrosting the evaporator by utilizing air flowing through the regeneration part.

In one feasible embodiment, the control method further includes:
generating, based on a water usage demand, the first water collection instruction, the second water collection instruction, or the third water collection instruction; and/or
generating, based on a water content of external air, the first water collection instruction, the second water collection instruction, or the third water collection instruction.

In one feasible embodiment, the step of generating, based on the water usage demand, the first water collection instruction, the second water collection instruction, or the third water collection instruction includes:
generating the second water collection instruction in the case where the water usage demand is less than a first threshold;
generating the first water collection instruction in the case where the water usage demand is greater than or equal to the first threshold and less than a second threshold; and
generating the third water collection instruction in the case where the water usage demand is greater than or equal to the second threshold,
where a value of the first threshold is less than that of the second threshold; and
the step of generating, based on the water content of the external air, the first water collection instruction, the second water collection instruction, or the third water collection instruction includes:
   generating the third water collection instruction in the case where the water content is less than a third threshold;
   generating the first water collection instruction in the case where the water content is greater than or equal to the third threshold and less than a fourth threshold; and
   generating the second water collection instruction in the case where the water content is greater than a fifth threshold,
   where a value of the third threshold is less than that of the fourth threshold.

According to a fourth aspect of the embodiments of the present disclosure, a computer-readable storage medium is provided.

The computer-readable storage medium stores a computer program to implement the control method according to any one of the above technical solutions.

According to a fifth aspect of the embodiments of the present disclosure, a control apparatus is provided. The control apparatus includes:
a memory storing a computer program; and
a processor executing the computer program,
where the processor, when executing the computer program, implements the control method according to any one of the above technical solutions.

Compared with the prior art, the present disclosure includes at least the following beneficial effects.

The liquid water source collection apparatus provided according to the embodiments of the present disclosure includes a liquid enrichment assembly, a liquid collection assembly, a condensation assembly, and a pipeline assembly. During use, air can be introduced from the outside, the air can be in contact with the liquid enrichment assembly, the enrichment part of the liquid enrichment assembly can capture water vapor or moisture in the air, and then the regeneration part can release the enriched moisture and water vapor, such that the liquid collection assembly can collect liquid water. The external air can also be introduced into the condensation assembly, the air exchanges heat with the condensation assembly at a lower temperature, the moisture in the air condenses at a low temperature to form a condensate or frost, and the condensate or the melted frost can be collected by the liquid collection assembly. The external air can also be first introduced into the liquid enrichment assembly, the moisture is enriched by the liquid enrichment assembly, and then the water content of the air discharged via the liquid enrichment assembly will increase, and this part of air can be discharged into the condensation assembly for further condensation. Based on this, the condensation assembly and the liquid enrichment assembly jointly produce liquid water, such that the generation efficiency of the liquid water is higher. In summary, with the liquid water source collection apparatus provided according to the embodiments of the present disclosure, the liquid water can be collected only by the liquid enrichment assembly of the liquid water source collection apparatus; or the liquid water can be collected only by the condensation assembly; or the moisture can be first enriched by the liquid enrichment assembly of the liquid water source collection apparatus, and then the liquid water can be collected by the condensation assembly. With the liquid water source collection apparatus provided according to the embodiments of the present disclosure, the liquid water can be collected in the air, and then the liquid water can be stored by the liquid collection assembly. When an electrical appliance, such as an air conditioner, needs to use the liquid water, the liquid water can be directly output via the liquid collection assembly without additionally filling water, and the user does not need to fill water, which can improve the user experience and ensure the smooth execution of the water-using function of the electrical appliance.

### BRIEF DESCRIPTION OF THE DRAWINGS

By reading the detailed description of preferred embodiments below, various additional advantages and benefits will become clear to those of ordinary skill in the art. The drawings are provided solely for the purpose of illustrating the preferred embodiments and are not to be construed as limiting the scope of the present disclosure. In addition, the same components are denoted by the same reference numerals throughout the drawings. In the drawings:
FIG. 1 is a schematic structural diagram of a liquid water source collection apparatus according to one embodiment of the present disclosure;
FIG. 2 is a schematic structural diagram of an air conditioner according to a first embodiment of the present disclosure;
FIG. 3 is a schematic structural diagram of an air conditioner according to a second embodiment of the present disclosure;
FIG. 4 is a schematic structural diagram of an air conditioner according to a third embodiment of the present disclosure;
FIG. 5 is a schematic structural diagram of an air conditioner according to a fourth embodiment of the present disclosure;
FIG. 6 is a schematic structural diagram of an air conditioner according to a fifth embodiment of the present disclosure;
FIG. 7 is a schematic structural diagram of an air conditioner according to a sixth embodiment of the present disclosure;
FIG. 8 is a schematic step flowchart of a control method for an air conditioner according to one embodiment of the present disclosure;
FIG. 9 is a structural block diagram of a computer-readable storage medium according to one embodiment of the present disclosure; and
FIG. 10 is a structural block diagram of a control apparatus according to one embodiment of the present disclosure.

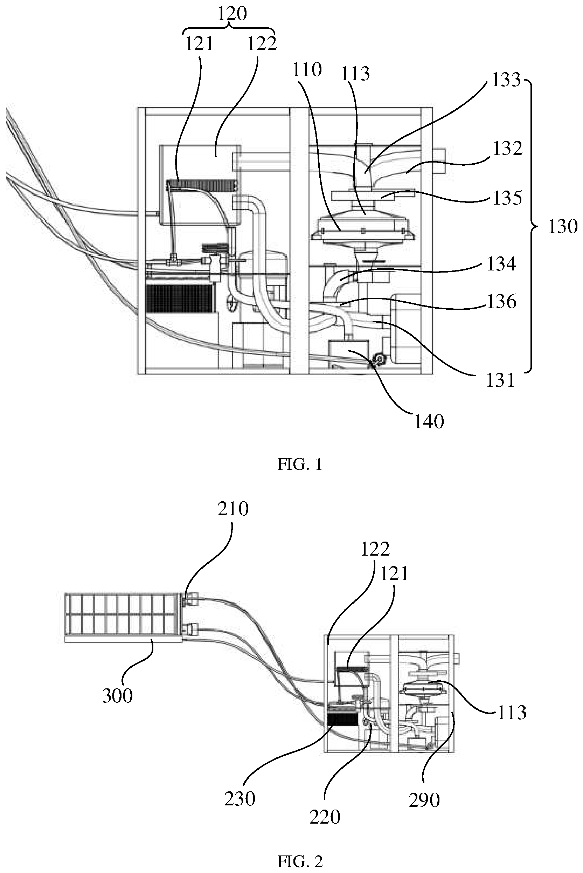

The correspondence relationships between reference numerals and component names in FIGs. 1 to 7 are as follows:
110 liquid enrichment assembly, 120 condensation assembly, 130 pipeline assembly, 140 liquid collection assembly, 150 cleaning filter;
111 enrichment part, 112 regeneration part, 113 first housing, 114 driving member, 121 liquid collection heat exchanger, 122 second housing, 131 input pipeline, 132 output pipeline, 133 moisture intake pipeline, 134 moisture release pipeline, 135 first control valve, 136 second control valve, 137 first air supply member, 138 second air supply member, 141 first water tank, 142 second water tank;
210 indoor heat exchanger, 220 compressor, 230 outdoor heat exchanger, 240 first throttling assembly, 250 second throttling assembly, 260 third control valve, 280 humidifier, 290 outdoor unit housing, 300 indoor unit housing, 310 fresh air module, 320 filter module, 330 cleaning module;
321 second filter member, 322 fifth filter member.

### DETAILED DESCRIPTION

In order to better understand the above technical solutions, the technical solutions in embodiments of the present disclosure will be described in detail below with reference to the drawings and specific embodiments. It should be understood that the embodiments of the present disclosure and specific features in the embodiments are detailed descriptions of the technical solutions in the embodiments of the present disclosure, but are not intended to limit the technical solutions in the present disclosure. The embodiments of the present disclosure and the technical features in the embodiments may be combined with each other without conflict.

As shown in FIG. 1, according to a first aspect of the embodiments of the present disclosure, a liquid water source collection apparatus is provided. The liquid water source collection apparatus includes: a liquid enrichment assembly 110, the liquid enrichment assembly 110 including an enrichment part 111 and a regeneration part 112; a condensation assembly 120 and a pipeline assembly 130, the pipeline assembly 130 connecting the liquid enrichment assembly 110 and the condensation assembly 120; and a liquid collection assembly 140, the liquid collection assembly 140 being in communication with the condensation assembly 120 and/or the liquid enrichment assembly 110.

The liquid water source collection apparatus provided according to the embodiments of the present disclosure includes a liquid enrichment assembly 110, a liquid collection assembly 140, a condensation assembly 120, and a pipeline assembly 130. During use, air can be introduced from the outside, the air can be in contact with the liquid enrichment assembly 110, the enrichment part 111 of the liquid enrichment assembly 110 can capture water vapor or moisture in the air, and then the regeneration part 112 can release the enriched moisture and water vapor, such that the liquid collection assembly 140 can collect liquid water. The external air can also be introduced into the condensation assembly 120, the air exchanges heat with the condensation assembly 120 at a lower temperature, the moisture in the air condenses at a low temperature to form a condensate or frost, and the condensate or the melted frost can be collected by the liquid collection assembly 140. The external air can also be first introduced into the liquid enrichment assembly 110, the moisture is enriched by the liquid enrichment assembly 110, and then the water content of the air discharged via the liquid enrichment assembly 110 will increase, and this part of air can be discharged into the condensation assembly 120 for further condensation. Based on this, the condensation assembly 120 and the liquid enrichment assembly 110 jointly produce liquid water, such that the generation efficiency of the liquid water is higher. In summary, with the liquid water source collection apparatus provided according to the embodiments of the present disclosure, the liquid water can be collected only by the liquid enrichment assembly 110 of the liquid water source collection apparatus; or the liquid water can be collected only by the condensation assembly 120; or the moisture can be first enriched by the liquid enrichment assembly 110 of the liquid water source collection apparatus, and then the liquid water can be collected by the condensation assembly 120. With the liquid water source collection apparatus provided according to the embodiments of the present disclosure, the liquid water can be collected in the air, and then the liquid water can be stored by the liquid collection assembly 140. When an electrical appliance, such as an air conditioner, needs to use the liquid water, the liquid water can be directly output via the liquid collection assembly 140 without additionally filling water, and the user does not need to fill water, which can improve the user experience and ensure the smooth execution of the water-using function of the electrical appliance.

In the liquid water source collection apparatus provided according to the embodiments of the present disclosure, the liquid enrichment assembly 110 is connected to the condensation assembly 120 through the pipeline assembly 130, so as to control the air to flow through the connected liquid enrichment assembly 110 and condensation assembly 120. Meanwhile, since the liquid enrichment assembly 110 and the condensation assembly 120 are in communication with each other, the liquid collection assembly 140 may be connected to the liquid enrichment assembly 110 and the condensation assembly 120, or in communication with one of the liquid enrichment assembly 110 and the condensation assembly 120, such that the liquid water can be collected and stored, and the liquid water can be collected more conveniently.

As shown in FIG. 1, in one feasible embodiment, the pipeline assembly 130 includes: an input pipeline 131 in communication with the liquid enrichment assembly 110 and disposed upstream of the airflow of the enrichment part 111; an output pipeline 132 in communication with the liquid enrichment assembly 110 and disposed downstream of the airflow of the enrichment part 111; a moisture intake pipeline 133 in communication with the condensation assembly 120 and disposed upstream of the airflow of the regeneration part 112; a moisture release pipeline 134, one end of the moisture release pipeline 134 being in communication with the liquid enrichment assembly 110 and disposed downstream of the airflow of the regeneration part 112, and the other end of the moisture release pipeline being in communication with the condensation assembly 120; a first control valve 136, the first control valve 136 being configured to communicate the input pipeline 131 with the moisture release pipeline 134; and a second control valve 135, the second control valve 135 being configured to communicate the output pipeline 132 with the moisture intake pipeline 133.

It can be understood that, upstream and downstream are determined based on the flow direction of the medium. Taking the example where the medium output by the pipeline assembly 130 is air, the air medium first passes through the upstream of the airflow of the enrichment part 111, passes through the enrichment part 111, and is then output via the downstream of the airflow. Similarly, for the upstream of the airflow and the downstream of the airflow of the regeneration part 112, the air medium passes through the upstream of the airflow, passes through the regeneration part 112, and is then output through the downstream of the airflow. That is, the upstream of the airflow and the downstream of the airflow are determined based on the flow direction of the medium, rather than being determined based on the placement position or orientation of the liquid enrichment assembly 110.

In this technical solution, the structural configuration of the pipeline assembly 130 is further provided. The pipeline assembly 130 includes an input pipeline 131, an output pipeline 132, a moisture intake pipeline 133, and a moisture release pipeline 134. During use, the input pipeline 131 is configured to introduce external air, and the air is supplied to the enrichment zone through the input pipeline 131; then, the moisture and/or water vapor in the air is captured by the enrichment zone, and subsequently, the air is discharged out of the liquid water source collection apparatus through the output pipeline 132. When it is necessary to utilize the liquid collection assembly 140 to collect liquid, air is introduced via the moisture intake pipeline 133, flows through the regeneration zone, and is then supplied into the moisture release pipeline 134, and the airflow generated by the flowing air can carry the moisture or water vapor detached from the liquid enrichment assembly 110 through the condensation assembly 120 and into the liquid collection assembly 140, completing the collection of water.

In this technical solution, the moisture release pipeline 134 is in communication with the condensation assembly 120, and when the condensation assembly 120 is opened, moisture or water vapor further exchanges heat with the condensation assembly, such that more water vapor can be condensed to form liquid water, and the liquid collection assembly 140 can collect more liquid water.

In this technical solution, the moisture intake pipeline 133 is also in communication with the condensation assembly 120, and based on this, the airflow for collecting the liquid enrichment assembly 110 can form a circulation between the liquid enrichment assembly 110 and the condensation assembly 120, which can further improve the collection efficiency of the liquid.

In this technical solution, by means of the arrangement of the input pipeline 131, the output pipeline 132, the moisture intake pipeline 133, and the moisture release pipeline 134, the enrichment of moisture onto the liquid enrichment assembly 110 is facilitated, and meanwhile, the collection of liquid from the liquid enrichment assembly 110 is facilitated, making the collection of liquid water by the liquid water source collection apparatus more convenient.

In this technical solution, the pipeline assembly 130 may further include a first control valve 136 and a second control valve 135. The first control valve 136 may control the connection between the input pipeline 131 and the moisture release pipeline 134, and the second control valve 135 may control the output pipeline 132 and the moisture intake pipeline 133. In this way, the liquid water source collection apparatus has various operation modes. For example, the input pipeline 131 and the moisture release pipeline 134 are connected, and the output pipeline 132 and the moisture intake pipeline 133 are connected. In this case, the air does not flow through the enrichment part 111 and the regeneration part 112 of the liquid enrichment assembly 110, but the air enters the condensation assembly 120 through the input pipeline 131 and the moisture release pipeline 134, and is discharged out of the condensation assembly 120 through the output pipeline 132 and the moisture intake pipeline 133. In the process, the condensation assembly 120 exchanges heat with the air, such that the water vapor in the air is condensed to form liquid water for collection by the liquid collection assembly 140. For another example, the input pipeline 131 and the output pipeline 132 are connected, and the moisture intake pipeline 133 and the moisture release pipeline 134 are connected. In this way, the air first flows through the enrichment part 111 of the liquid enrichment assembly 110 through the input pipeline 131 and the output pipeline 132, and then flows through the regeneration part 112 through the moisture intake pipeline 133 and the moisture release pipeline 134 to collect moisture and water vapor, and the collected moisture and water vapor are supplied to the condensation assembly 120 for condensation, which can improve the production efficiency of liquid water.

It can be understood that, in the liquid water source collection apparatus provided according to the embodiments of the present disclosure, during use, the medium output via the pipeline assembly 130 may also be other water-containing media, and air is merely an example; the type and kind of the medium output via the pipeline assembly 130 are not specifically limited in the present disclosure.

In one feasible embodiment, the liquid enrichment assembly 110 further includes: a first air supply member 137 disposed within the input pipeline 131 and/or the output pipeline 132 and configured to cause air to flow through the enrichment part 111 of the liquid enrichment assembly 110; and a second air supply member 138 disposed within the moisture intake pipeline 133 and/or the moisture release pipeline 134 and configured to cause air to flow through the regeneration part 112 of the liquid enrichment assembly 110.

In this technical solution, the liquid enrichment assembly 110 may further include a first air supply member 137. By means of the arrangement of the first air supply member 137, it facilitates the formation of an airflow by the air passing through the input pipeline 131 and the output pipeline 132 to flow through the enrichment zone of the liquid enrichment assembly 110, thereby facilitating the capture of moisture and water vapor in the air by the moisture adsorption member.

In this technical solution, the liquid enrichment assembly 110 may further include a second air supply member 138. By means of the arrangement of the second air supply member 138, it facilitates the formation of an airflow by the air. The airflow passes through the moisture intake pipeline 133 and the moisture release pipeline 134 to carry the moisture and water vapor released via the moisture adsorption member, facilitating the flow of the moisture and water vapor through the condensation assembly 120, so as to enrich liquid water into the liquid collection assembly 140.

In one feasible embodiment, the first control valve 136 is further configured to adjust the opening degree between the input pipeline 131 and the moisture release pipeline 134; the second control valve 135 is further configured to adjust the opening degree between the output pipeline 132 and the moisture intake pipeline 133.

In this technical solution, the first control valve 136 is further configured to adjust the opening degree between the input pipeline 131 and the moisture release pipeline 134, and the second control valve 135 is further configured to adjust the opening degree between the output pipeline 132 and the moisture intake pipeline 133; that is, the input pipeline 131 can be connected to both the moisture release pipeline 134 and the output pipeline 132, the output pipeline 132 can be connected to both the input pipeline 131 and the moisture intake pipeline 133, and the opening degree can be adjusted by the first control valve 136 and the second control valve 135. Based on this, during operation, external air is introduced via the input pipeline 131, and moisture and water vapor in the external air are captured by the liquid enrichment assembly 110 and then flow out via the output pipeline 132. When the moisture is enriched, the airflow is output via the moisture intake pipeline 133, part of the airflow is discharged via the output pipeline 132, and part of the airflow enters the liquid enrichment assembly 110 and carries the moisture and water vapor enriched onto the liquid enrichment assembly 110 to enter the moisture release pipeline 134. Meanwhile, part of the airflow in the input pipeline 131 also enters the moisture release pipeline 134 and then enters the condensation assembly for condensation. Through condensation, a condensate or frost can be formed, and finally, the condensate and the melted frost are collected by the liquid collection assembly 140, such that the liquid water can be enriched. In this way, the distribution of the air pressure in the liquid water source collection apparatus is more balanced, further facilitating the production of liquid water.

In one feasible embodiment, the liquid enrichment assembly 110 includes: a first housing 113, with the enrichment part 111 and the regeneration part 112 formed on the first housing 113; a moisture adsorption member disposed within the first housing 113; and a regeneration member configured to supply energy to the regeneration part 112 to separate water molecules.

In this technical solution, the liquid enrichment assembly 110 may include a first housing 113, a moisture adsorption member, an enrichment member, and a regeneration member. During use, the moisture adsorption member can rotate relative to the first housing 113. When air comes into contact with the moisture adsorption member via the enrichment zone on the first housing 113 through the input pipeline 131, the enrichment member provides energy to a region of the moisture adsorption member corresponding to the enrichment zone, and moisture or water vapor in the air can be captured by the region of the moisture adsorption member corresponding to the enrichment zone. When the moisture adsorption member faces toward the regeneration zone, by providing energy to the regeneration zone via the regeneration member, the moisture adsorption member can release water molecules, and the water molecules can enter the liquid collection assembly 140 through the moisture release pipeline 134. Based on this, the capture and release of moisture can be achieved, thereby enabling the liquid collection assembly 140 to enrich water.

In the embodiments of the present disclosure, the moisture adsorption member may be in the shape of a rotary disk, and the moisture adsorption member is provided with a moisture adsorption agent for adsorbing moisture. The moisture adsorption agent may be, for example, zeolite, modified/synthetic zeolite, a molecular sieve (including but not limited to a zeolite molecular sieve, an A/X/Y-type molecular sieve, a ZSM molecular sieve, a Beta molecular sieve, etc.), a polymeric moisture adsorption agent, alkali metal aluminosilicate (a 13X molecular sieve), lithium chloride, silica gel, modified silica gel, activated aluminum oxide, and other materials with moisture adsorbing performance. The polymeric moisture adsorption agent is also referred to as a polymer adsorbent, which has a lower regeneration temperature than conventional adsorbents such as silica gel, activated carbon, or a molecular sieve.

In one embodiment, the moisture adsorption member may be made of porous materials such as zeolite, molecular sieves, metal organic frameworks (metal organic frameworks, MOFs), covalent organic frameworks (covalent organic frameworks, COFs), nano-carbon, and silicon dioxide. In one embodiment, the moisture adsorption member may also be formed by filling with granular solids or particles made of at least one of the above porous materials.

In one embodiment, the moisture adsorption member may be a honeycomb-shaped or corrugated rotary disk carrying a moisture adsorption agent, capable of adsorbing and desorbing the adsorbed moisture for repeated desorption and regeneration.

In one embodiment, the moisture adsorption member includes an inorganic/organic fiber substrate (e.g., ceramic, glass fiber, MOFs, COFs, or cordierite). The fiber substrate is coated with a moisture adsorption agent such as a molecular sieve. The molecular sieve is uniformly distributed between the fiber substrates and on the surface of the fiber substrates, so as to adsorb moisture from the airflow. The molecular sieve may include a single crystal molecular sieve such as an A-type molecular sieve, an X/Y-type molecular sieve, a ZSM molecular sieve, or a Beta molecular sieve, or a mixed crystal molecular sieve.

In one feasible embodiment, the moisture adsorption-desorption member further includes an enrichment member, and the enrichment member is configured to supply energy to the enrichment zone; the enrichment member includes at least one of a phase change heat exchanger, a Peltier effect heat exchanger, a fan, a liquid cooling heat exchanger, and a vortex tube. Based on this, it facilitates the supply of cold energy to the rotary disk via the enrichment member, thereby facilitating the capture of water vapor and moisture in the air by the rotary disk.

It can be understood that, to reduce the cost of the liquid water source collection apparatus, the enrichment member may be a fan.

In one feasible embodiment, the regeneration member includes at least one of: thermal radiation, a hot end of a heat pump, a hot end of a heat pipe, and a solar heat source. Based on this, it facilitates the provision of thermal energy to the rotary disk by the regeneration member, facilitates the release of moisture by the rotary disk, and facilitates the enrichment of liquid water by the liquid collection assembly 140.

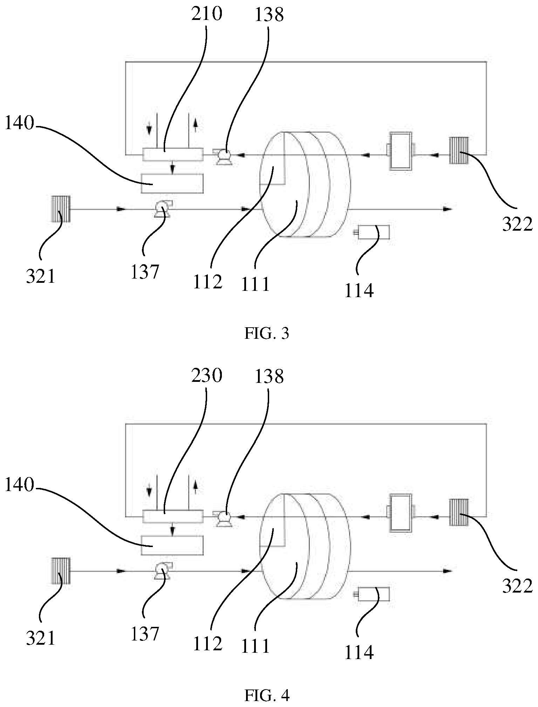

As shown in FIGs. 3 to 7, in one feasible embodiment, the liquid enrichment assembly 110 further includes: a driving member 114 connected to the moisture adsorption member and configured to drive the moisture adsorption member to rotate.

In this technical solution, the liquid enrichment assembly 110 may further include a driving member 114. The driving member 114 drives the moisture adsorption member to rotate, such that the moisture adsorption member may alternately rotate between the enrichment part 111 and the regeneration part 112, thereby improving the enrichment efficiency of the liquid.

In one feasible embodiment, the liquid collection assembly 140 is configured to be connected to a water-using apparatus, and the water-using apparatus includes a humidification component and/or a cleaning component.

As shown in FIG. 2, in one feasible embodiment, the condensation assembly 120 includes: a liquid collection heat exchanger 121. The liquid collection heat exchanger 121 is configured to form condensed water and/or frost, and the liquid collection assembly collects, through an input end, the condensed water and/or liquid formed by melting of the frost.

In this technical solution, the structural configuration of the condensation assembly 120 is further provided. The condensation assembly 120 includes a liquid collection heat exchanger 121. By controlling the temperature of the liquid collection heat exchanger 121, for example, the temperature of the liquid collection heat exchanger 121 may be controlled to be reduced, the temperature of the liquid collection heat exchanger 121 is reduced to be lower than the dew point temperature, such that the condensed water can be formed through condensation or the frost can be formed through desublimation on the liquid collection heat exchanger 121, and then the condensed water is collected by the liquid collection assembly 140; or the liquid collection heat exchanger 121 is controlled to be heated to melt the frost to form liquid water, and then the liquid water is collected by the liquid collection assembly 140, thereby enabling the enrichment of the liquid water.

In one feasible embodiment, the condensation assembly 120 further includes: a second housing 122. The liquid collection heat exchanger 121 is disposed within the second housing 122, the second housing 122 is configured to collect the condensed water and/or the liquid formed by the melting of the frost, the input end of the liquid collection assembly 140 is in communication with the second housing 122, and the pipeline assembly 130 is in communication with the second housing 122.

In this technical solution, in addition to the liquid collection heat exchanger 121, the condensation assembly 120 may further include a second housing 122. By disposing the liquid collection heat exchanger 121 within the second housing 122, when the condensed water on the condensation assembly 120 drips under the influence of gravity, the second housing 122 may play a role in receiving, and then the second housing 122 is connected to the liquid collection assembly 140, facilitating the enrichment of water by the liquid collection assembly 140.

In this technical solution, the pipeline assembly 130 is in communication with the second housing 122 to facilitate heat exchange between the air and the liquid collection heat exchanger 121, thereby facilitating the formation of liquid water by condensation.

In some examples, both the moisture intake pipeline 133 and the moisture release pipeline 134 may be in communication with the second housing 122 to facilitate heat exchange between the air and the liquid collection heat exchanger 121, thereby facilitating the airflow to form a circulation and thus producing more liquid water.

It can be understood that, considering that the liquid collection heat exchanger 121 condenses water vapor in the air to form condensed water, to make the liquid collection heat exchanger 121 come into full contact with the air, the second housing 122 may be disposed at the bottom of the liquid collection heat exchanger 121, and part of the liquid collection heat exchanger 121 is in an exposed state, which can improve the contact efficiency between the liquid collection heat exchanger 121 and the air while playing a role in receiving.

As shown in FIGs. 2 to 7, according to a fourth aspect of the embodiments of the present disclosure, an air conditioner is provided. The air conditioner includes: the liquid water source collection apparatus according to any one of the above technical solutions.

Since the air conditioner provided according to the embodiments of the present disclosure includes the liquid water source collection apparatus according to any one of the above technical solutions, the air conditioner possesses all beneficial effects of the liquid water source collection apparatus of the above technical solutions, which are not repeated herein.

In one feasible embodiment, the air conditioner further includes: an indoor heat exchanger 210; a compressor 220 connected to the indoor heat exchanger 210; an outdoor heat exchanger 230 connected to the compressor 220; a first throttling assembly 240 separately connected to the outdoor heat exchanger 230 and the indoor heat exchanger 210; and a first refrigerant pipeline in communication with the indoor heat exchanger 210, the compressor 220, the outdoor heat exchanger 230, and the first throttling assembly 240 to form a refrigerant circulation.

In this technical solution, the air conditioner may further include an indoor heat exchanger 210, a compressor 220, an outdoor heat exchanger 230, a first throttling assembly 240, and a first refrigerant pipeline. The refrigerant circulates among the indoor heat exchanger 210, the compressor 220, the outdoor heat exchanger 230, and the first throttling assembly 240 through the first refrigerant pipeline. By means of the compressor 220, the pressure state and temperature of the refrigerant can be adjusted, and further by controlling the flow direction of the refrigerant, the indoor heat exchanger 210 can be controlled to perform heating or cooling, such that the indoor temperature can be adjusted.

In one feasible embodiment, the pipeline assembly 130 is in communication with at least one of the indoor heat exchanger 210 and the outdoor heat exchanger 230, and at least one of the indoor heat exchanger 210 and the outdoor heat exchanger 230 serves as the liquid collection heat exchanger 121 of the condensation assembly 120; in the case where the pipeline assembly 130 is in communication with the outdoor heat exchanger 230 and the indoor heat exchanger 210, the liquid collection assembly 140 includes a first water tank 141 and a second water tank 142; the first water tank 141 is in communication with the outdoor heat exchanger 230, and the second water tank 142 is in communication with the indoor heat exchanger 210.

In this technical solution, at least one of the indoor heat exchanger 210 and the outdoor heat exchanger 230 may serve as the liquid collection heat exchanger 121 of the condensation assembly 120. Considering that the air conditioner may be in a cooling or heating mode, and at least one of the outdoor heat exchanger 230 and the indoor heat exchanger 210 of the air conditioner will serve as an evaporator, in this technical solution, the pipeline assembly 130 is made to be in communication with the outdoor heat exchanger 230 and/or the indoor heat exchanger 210. The air with high water content output via the pipeline assembly 130 is transported to the one serving as the evaporator between the outdoor heat exchanger 230 and the indoor heat exchanger 210, causing the moisture to condense into air, and then the liquid collection assembly 140 collects the condensed water via the outdoor heat exchanger 230 and/or the indoor heat exchanger 210, which can improve the water production efficiency.

As shown in FIG. 3, in one feasible embodiment, the pipeline assembly 130 is in communication with the indoor heat exchanger 210, and the indoor heat exchanger 210 serves as the liquid collection heat exchanger 121 of the condensation assembly 120.

In this technical solution, the indoor heat exchanger 210 serves as the liquid collection heat exchanger 121 of the condensation assembly 120, and based on this, the liquid collection assembly 140 of the air conditioning device can be disposed indoors. When the air conditioner is cooling the indoor environment, the indoor heat exchanger 210 serves as an evaporator, and the outdoor heat exchanger 230 serves as a condenser. The indoor heat exchanger 210 can condense the water vapor in the air, and then the liquid formed by condensation of the condensation assembly 120 is collected by means of the liquid collection assembly 140 and may be collected in the liquid collection assembly 140. When a water-using apparatus needs to use water, the liquid accumulated in the liquid collection assembly 140 can be supplied to the water-using apparatus. In this way, the liquid water can be provided to the indoor part of the air conditioner more conveniently, improving the user experience. In one feasible embodiment, the pipeline assembly 130 is in communication with the outdoor heat exchanger 230, and the outdoor heat exchanger 230 serves as the liquid collection heat exchanger 121 of the condensation assembly 120.

As shown in FIG. 4, in one feasible embodiment, the pipeline assembly 130 is in communication with the outdoor heat exchanger 230, and the outdoor heat exchanger 230 serves as the liquid collection heat exchanger 121 of the condensation assembly 120.

In this technical solution, the outdoor heat exchanger 230 serves as the liquid collection heat exchanger 121 of the condensation assembly 120, and based on this, the liquid collection assembly 140 of the air conditioning device can be disposed outdoors. When the air conditioner is heating the indoor environment, the indoor heat exchanger 210 serves as a condenser, and the outdoor heat exchanger 230 serves as an evaporator. The outdoor heat exchanger 230 can condense the water vapor in the air, and then the liquid formed by condensation of the condensation assembly 120 is collected by means of the liquid collection assembly 140 and may be collected in the liquid collection assembly 140. When a water-using apparatus needs to use water, the liquid accumulated in the liquid collection assembly 140 can be supplied to the water-using apparatus. In this way, most of the main body structure of the air conditioning device can be disposed outdoors, which can reduce the amount of indoor space occupied by the air conditioning device while providing liquid water to the air conditioner, thereby improving the user experience.

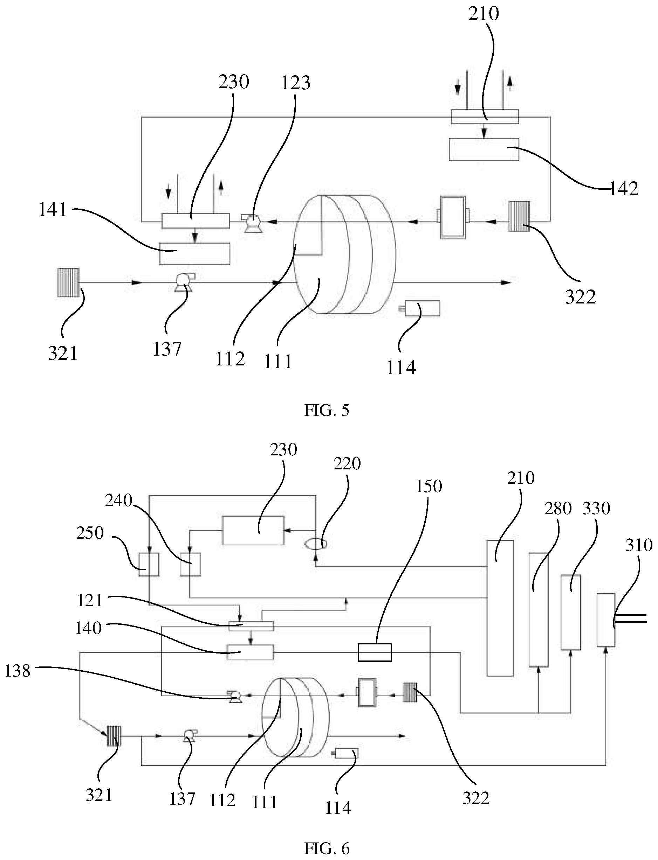

As shown in FIG. 5, in one feasible embodiment, the pipeline assembly 130 is in communication with the outdoor heat exchanger 230 and the indoor heat exchanger 210; the liquid collection assembly 140 includes a first water tank 141 and a second water tank 142; the first water tank 141 is in communication with the outdoor heat exchanger 230, and the second water tank 142 is in communication with the indoor heat exchanger 210.

In this technical solution, one of the outdoor heat exchanger 230 and the indoor heat exchanger 210 may serve as the liquid collection heat exchanger 121. When the outdoor heat exchanger 230 serves as the liquid collection heat exchanger 121 of the condensation assembly 120, the liquid collection assembly 140 of the air conditioning device can be disposed outdoors. When the air conditioner is heating the indoor environment, the indoor heat exchanger 210 serves as a condenser, and the outdoor heat exchanger 230 serves as an evaporator. The outdoor heat exchanger 230 can condense the water vapor in the air, and then the liquid formed by condensation of the condensation assembly 120 is collected by means of the liquid collection assembly 140 and may be collected in the liquid collection assembly 140. When a water-using apparatus needs to use water, the liquid accumulated in the liquid collection assembly 140 can be supplied to the water-using apparatus. In this way, most of the main body structure of the air conditioning device can be disposed outdoors, which can reduce the amount of indoor space occupied by the air conditioning device while providing liquid water to the air conditioner, thereby improving the user experience. When the indoor heat exchanger 210 serves as the liquid collection heat exchanger 121 of the condensation assembly 120, the liquid collection assembly 140 of the air conditioning device can be disposed indoors. When the air conditioner is cooling the indoor environment, the indoor heat exchanger 210 serves as an evaporator, and the outdoor heat exchanger 230 serves as a condenser. The indoor heat exchanger 210 can condense the water vapor in the air, and then the liquid formed by condensation of the condensation assembly 120 is collected by means of the liquid collection assembly 140 and may be collected in the liquid collection assembly 140. When a water-using apparatus needs to use water, the liquid accumulated in the liquid collection assembly 140 can be supplied to the water-using apparatus. In this way, most of the main body structure of the air conditioning device can be disposed indoors, which can improve the user experience while providing liquid water to the air conditioner.

In this technical solution, both the outdoor heat exchanger 230 and the indoor heat exchanger 210 can serve as the condensation assembly 120. Based on this, one of the outdoor heat exchanger 230 and the indoor heat exchanger 210 can serve as the evaporator regardless of whether the air is in a cooling state or a heating state. Based on this, the water-using apparatus can enrich liquid water regardless of whether the air conditioner is in a cooling state or a heating state, which can further improve the water enrichment efficiency and ensure the water usage demand of the water-using apparatus.

In this technical solution, when both the outdoor heat exchanger 230 and the indoor heat exchanger 210 may serve as the condensation assembly 120, the liquid collection assembly 140 may include a first water tank 141 and a second water tank 142. The first water tank 141 may receive the condensed water produced by the outdoor heat exchanger 230, and the second water tank 142 may receive the condensed water produced by the indoor heat exchanger 210. In this way, two modules can respectively receive the condensed water produced by two heat exchangers, facilitating the enrichment of the condensed water.

In one feasible embodiment, the air conditioner further includes: a second refrigerant pipeline. The second refrigerant pipeline is in communication with the condensation assembly 120; one end of the second refrigerant pipeline is in communication with the indoor heat exchanger 210, and the other end of the second refrigerant pipeline is in communication with the compressor 220, such that the liquid collection heat exchanger 121 of the condensation assembly 120 is connected in parallel with the outdoor heat exchanger 230.

In this technical solution, the air conditioner may include a second refrigerant pipeline, a second throttling assembly 250, and a first air supply member 137. By means of the arrangement of the second refrigerant pipeline, the liquid collection heat exchanger 121 and the outdoor heat exchanger 230 may be connected in parallel. Based on this, when the air conditioner is in a heating mode, and the outdoor heat exchanger 230 serves as an evaporator, the liquid collection heat exchanger 121 also serves as an evaporator. The condensation assembly 120 condenses water vapor in the air, and then the liquid formed by condensation of the condensation assembly 120 can be collected by means of the liquid collection assembly 140; alternatively, the condensation assembly 120 may also desublimate the water vapor in the air into frost, and after the frost melts, liquid water can also be formed for collection by the liquid collection assembly 140. By means of the arrangement of the second refrigerant pipeline and the second throttling assembly 250, the control of the temperature of the liquid collection heat exchanger 121 is facilitated, which further facilitates the formation of condensed water or frost, thereby improving the enrichment efficiency of the liquid.

In some examples, the second refrigerant pipeline may be in communication with the indoor heat exchanger 210 or the compressor 220, may be in communication between the compressor 220 and the outdoor heat exchanger 230, or may be in communication between the first throttling assembly 240 and the indoor heat exchanger 210; it is only required to achieve that the liquid collection heat exchanger 121 is connected in parallel with the outdoor heat exchanger 230, and the communication position of the second refrigerant pipeline on the first refrigeration pipeline is not limited in the present disclosure.

In some examples, as shown in FIG. 6, in one feasible embodiment, the air conditioner further includes: a second refrigerant pipeline. The second refrigerant pipeline flows through the condensation assembly 120, one end of the second refrigerant pipeline is in communication with the first refrigerant pipeline between the first throttling assembly 240 and the indoor heat exchanger 210, and the other end of the second refrigerant pipeline is in communication with the first refrigerant pipeline between the compressor 220 and the outdoor heat exchanger 230, such that the liquid collection heat exchanger 121 of the condensation assembly 120 is connected in parallel with the outdoor heat exchanger 230. The air conditioner further includes: a second throttling assembly 250 separately connected to the indoor heat exchanger 210 and the liquid collection heat exchanger 121; and a third air supply member configured to supply air to the condensation assembly 120.

In this technical solution, the air conditioner may include a second refrigerant pipeline, a second throttling assembly 250, and a first air supply member 137. By means of the arrangement of the second refrigerant pipeline, the liquid collection heat exchanger 121 and the outdoor heat exchanger 230 may be connected in parallel. Based on this, when the air conditioner is in a heating mode, and the outdoor heat exchanger 230 serves as an evaporator, the liquid collection heat exchanger 121 also serves as an evaporator. The condensation assembly 120 condenses water vapor in the air, and then the liquid formed by condensation of the condensation assembly 120 can be collected by means of the liquid collection assembly 140; alternatively, the condensation assembly 120 may also desublimate the water vapor in the air into frost, and after the frost melts, liquid water can also be formed for collection by the liquid collection assembly 140. By means of the arrangement of the second refrigerant pipeline and the second throttling assembly 250, the control of the temperature of the liquid collection heat exchanger 121 is facilitated, which further facilitates the formation of condensed water or frost, thereby improving the enrichment efficiency of the liquid.

In this technical solution, the air conditioner further includes a third air supply member, and the third air supply member is configured to supply air to the condensation assembly 120. Based on this, in the case where the condensation assembly 120 frosts, supplying air via the third air supply assembly facilitates the melting of the frost.

In one feasible embodiment, the air conditioner further includes: a third refrigerant pipeline. The third refrigerant pipeline is in communication with the condensation assembly 120, one end of the third refrigerant pipeline is in communication with the first throttling assembly 240, and the other end of the third refrigerant pipeline is in communication with the indoor heat exchanger 210.

In this technical solution, the air conditioner may further include a third refrigerant pipeline. When the indoor heat exchanger 210 serves as an evaporator, the liquid collection heat exchanger 121 also serves as an evaporator. The condensation assembly 120 condenses water vapor in the air, and then the liquid formed by condensation of the condensation assembly 120 can be collected by means of the liquid collection assembly 140; alternatively, the condensation assembly 120 may also desublimate the water vapor in the air into frost, and after the frost melts, liquid water can also be formed for collection by the liquid collection assembly 140. By means of the arrangement of the third refrigerant pipeline and the third throttling assembly, the control of the temperature of the liquid collection heat exchanger 121 is facilitated, which further facilitates the formation of condensed water or frost, thereby improving the enrichment efficiency of the liquid.

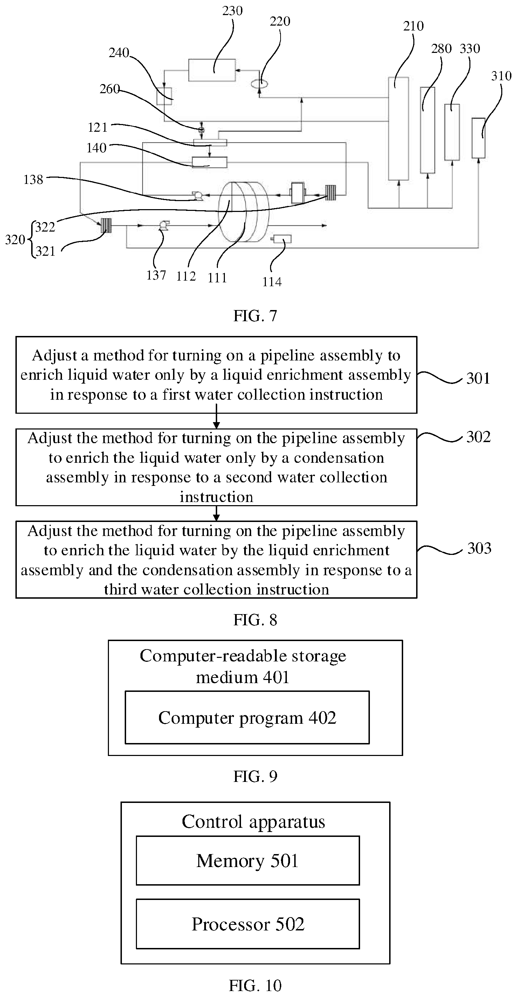

It can be understood that the third refrigerant pipeline may be in communication with the compressor 220, may be in communication with the indoor heat exchanger 210, or may be in communication between the compressor 220 and the indoor heat exchanger 210; it is only required to achieve a parallel connection between the second liquid collection heat exchanger 270 and the indoor heat exchanger 210, and the communication position of the third refrigerant pipeline on the first refrigeration pipeline is not limited in the present disclosure. As shown in FIG. 7, in one feasible embodiment, the air conditioner further includes: a third refrigerant pipeline. The third refrigerant pipeline flows through the condensation assembly 120, one end of the third refrigerant pipeline is in communication with the first refrigerant pipeline between the first throttling assembly 240 and the indoor heat exchanger 210, and the other end of the third refrigerant pipeline is in communication with the first refrigerant pipeline between the compressor 220 and the indoor heat exchanger 210. The air conditioner further includes: a third control valve 260 disposed on the third refrigerant pipeline; and a fourth air supply member configured to supply air to the liquid collection heat exchanger 121 of the condensation assembly 120.

In this technical solution, the air conditioner may further include a third refrigerant pipeline, one end of the third refrigerant pipeline is in communication with the first refrigerant pipeline between the first throttling assembly 240 and the indoor heat exchanger 210, and the other end of the third refrigerant pipeline is in communication with the first refrigerant pipeline between the compressor 220 and the indoor heat exchanger 210. Based on this, the condensation assembly 120 and the indoor heat exchanger 210 may be connected in parallel. When the air conditioner is in a cooling mode, and the indoor heat exchanger 210 serves as an evaporator, the liquid collection heat exchanger 121 also serves as an evaporator. The condensation assembly 120 condenses water vapor in the air, and then the liquid formed by condensation of the condensation assembly 120 can be collected by means of the liquid collection assembly 140; alternatively, the condensation assembly 120 may also desublimate the water vapor in the air into frost, and after the frost melts, liquid water can also be formed for collection by the liquid collection assembly 140. By means of the arrangement of the third refrigerant pipeline and the third throttling assembly, the control of the temperature of the liquid collection heat exchanger 121 is facilitated, which further facilitates the formation of condensed water or frost, thereby improving the enrichment efficiency of the liquid.

In this technical solution, the air conditioner further includes a fourth air supply member, and the fourth air supply member is configured to supply air to the condensation assembly 120. Based on this, in the case where the condensation assembly 120 frosts, supplying air via the fourth air supply assembly facilitates the melting of the frost.

In this technical solution, the air conditioner may further include a third control valve 260, and the third control valve 260 can control the opening or closing of the third refrigerant pipeline and adjust the opening degree of the third refrigerant pipeline. Based on this, the control of the start or stop of the condensation assembly 120 is facilitated, and meanwhile, the adjustment of the water production efficiency of the condensation assembly 120 is facilitated.

In one feasible embodiment, the air conditioner further includes: a third housing; the outdoor heat exchanger 230, the compressor 220, and the liquid collection assembly 140 are disposed within the third housing.

In this technical solution, the air conditioner may further include a third housing, and the outdoor heat exchanger 230, the compressor 220, and the liquid collection assembly 140 can be accommodated by means of the arrangement of the third housing. Based on this, in the case where the third housing is disposed outdoors, the outdoor heat exchanger 230, the compressor 220, and the liquid collection assembly 140 can also be disposed outdoors. On the one hand, the amount of space occupied by the air conditioner indoors can be reduced, and user experience can be improved; on the other hand, the noise of the air conditioner can be reduced, and user experience can be improved.

As shown in FIGs. 2 to 7, in one feasible embodiment, the air conditioner further includes: a humidifier 280, the liquid collection assembly 140 being in communication with the humidifier 280. The humidifier 280 includes a curtain body, and the liquid collection assembly 140 is configured to output liquid to the curtain body.

In this technical solution, the air conditioner may further include a humidifier 280, and the humidifier 280 may include a curtain body. When it is necessary to humidify an air environment, liquid can be supplied onto the curtain body by the liquid collection assembly 140, and then evaporation of the liquid can adjust indoor air humidity.

As shown in FIG. 2, in one feasible embodiment, the air conditioner further includes: an outdoor unit housing 290, the liquid enrichment assembly 110 and the outdoor heat exchanger 230 being disposed within the outdoor unit housing 290; an indoor unit housing 300, the indoor heat exchanger 210 being disposed within the indoor unit housing 300; and a fresh air module 310, an air intake port of the fresh air module 310 being in communication with a first air inlet of the outdoor unit housing 290, and an output end of the fresh air module 310 being connected to a second air inlet of the indoor unit housing 300.

In this technical solution, the air conditioner may further include an outdoor unit housing 290, an indoor unit housing 300, and a fresh air module 310. An air intake port of the fresh air module 310 is in communication with a first air inlet of the outdoor unit housing 290, and an output end of the fresh air module 310 is connected to a second air inlet of the indoor unit housing 300. In this way, outdoor air can be introduced indoors, which can improve the air environment.

In one feasible embodiment, the fresh air module 310 further includes: an oxygen production module and an absorption module, the oxygen production module and the absorption module being disposed within a housing of the fresh air module 310.

In this technical solution, the structural configuration of the fresh air module 310 is further provided. The fresh air module 310 may further include an oxygen production module and an absorption module. Oxygen may be produced by means of the arrangement of the oxygen production module, which can further improve the indoor air environment. Toxic and harmful substances in the indoor air can be absorbed by means of the arrangement of the absorption module, and carbon dioxide in the air can also be absorbed, thereby improving the indoor air environment. In one embodiment, the oxygen production module may produce and enrich oxygen by means of a molecular sieve, and the fresh air module 310 is provided with a channel in communication with the outdoors to discharge the exhaust gas formed after oxygen production. In another embodiment, the fresh air module 310 is a bi-directional fresh air module, that is, the air intake and air supply processes of the fresh air module 310 may be achieved alternately by means of the same pipeline.

In some examples, the oxygen production module may be a molecular sieve oxygen production module, the absorption module may be a carbon dioxide module, and the absorption module is in communication with the indoors and is configured to absorb carbon dioxide in the indoor air and discharge oxygen produced by the oxygen production module into the indoors, so as to achieve indoor air regulation.

As shown in FIGs. 2 to 7, in one feasible embodiment, the air conditioner further includes: a filter module 320, the filter module 320 being configured to filter air entering at least one of the liquid water source collection apparatus, the outdoor unit housing 290, and the indoor unit housing 300; and a cleaning module 330, an output end of the liquid collection assembly 140 being in communication with the cleaning module 330, and the cleaning module 330 being configured to clean the filter module 320.

In this technical solution, the air conditioner may further include a filter module 320, and the air entering at least one of the liquid water source collection apparatus, the outdoor unit housing 290, and the indoor unit housing 300 may be filtered by means of the arrangement of the filter module 320. In this way, the cleanliness of the liquid water in the liquid collection assembly 140 can be improved, and the cleanliness of the indoor air can also be improved.

In this technical solution, the air conditioner may further include a cleaning module 330, and the cleaning module 330 cleans the filter module 320, which can improve the cleanliness of the filter module 320. In addition, the cleaning module 330 is in communication with the output end of the liquid collection assembly 140, such that the liquid collection assembly 140 can supply water required for cleaning to the cleaning module 330, and the liquid collection assembly 140 can collect liquid water automatically, which can reduce or avoid manual water addition and improve the user experience.

As shown in FIG. 6, in some examples, the air conditioner may further include a cleaning filter 150, and the cleaning filter 150 may be disposed within the cleaning module 330, at an output end of the liquid collection assembly 140, or on a path between the liquid collection assembly 140 and the cleaning module 330. The cleaning filter 150 is configured to filter water output by the liquid collection assembly 110 to the cleaning module 330 or configured to filter water output by the cleaning module 330. Such an arrangement makes water used for cleaning cleaner, which can reduce the probability of secondary contamination.

It can be understood that by means of the air conditioner and the liquid water source collection apparatus provided according to the embodiments of the present disclosure, a vast majority of water collected by the liquid water source collection apparatus is liquid water formed by condensation of water vapor in air or liquid water obtained by melting frost; therefore, when the liquid water source collection apparatus is in a clean state, the obtained liquid water is also clean. Adding a cleaning filter 150 can further ensure the cleanliness of the water and make the water purer, which can further improve the user experience.

In one feasible embodiment, the filter module 320 includes: a first filter member, configured to be disposed at an air inlet of the outdoor unit housing 290; a second filter member 321, configured to be disposed at an air inlet of the fresh air module 310; or a third filter member, configured to cover both the fresh air module 310 and the first air inlet of the outdoor unit housing 290.

In this technical solution, the structural configuration of the filter module 320 is further provided. The filter module 320 may include a first filter member and a second filter member 321, so as to cover the air inlet of the outdoor unit housing 290 and the air inlet of the fresh air module 310, respectively, such that the air entering the outdoor unit housing 290 is cleaner, thereby improving the cleanliness of the liquid water. The second filter member 321 can filter the air entering the fresh air module 310, thereby improving the cleanliness of the indoor air.

In this technical solution, the fresh air module 310 and the first air inlet of the outdoor unit housing 290 can also be directly covered by one third filter member, which can also ensure the cleanliness of the liquid water and the cleanliness of the indoor air.

In one feasible embodiment, the filter module 320 further includes: a fourth filter member, configured to be disposed at the air inlet of the indoor unit housing 300; and fifth filter members 322, configured to be disposed at inlets of the moisture intake pipeline 133 and the moisture release pipeline 134 of the pipeline assembly 130; the cleaning module 330 is configured to clean at least one of the first filter member, the second filter member 321, the third filter member, the fourth filter member, and the fifth filter member 322.

In this technical solution, the filter module 320 may further include a fourth filter member. By arranging the fourth filter member at the air inlet of the indoor unit housing 300, the cleanliness of the indoor unit of the air conditioner can be improved, and the maintenance frequency of the air conditioner can be reduced. By arranging the fifth filter member 322 at the inlets of the moisture intake pipeline 133 and the moisture release pipeline 134, the air entering the condensation assembly 120 can be cleaner.

In this technical solution, at least one of the first filter member, the second filter member 321, the third filter member, the fourth filter member, and the fifth filter member 322 is cleaned by the cleaning module 330, such that the cleanliness of the first filter member, the second filter member 321, the third filter member, the fourth filter member, and the fifth filter member 322 can be improved, and the maintenance frequency can be reduced.

As shown in FIG. 8, according to a third aspect of the embodiments of the present disclosure, a control method is provided. The control method is used to control the air conditioner according to any one of the above technical solutions, and the control method includes the following steps.

In step 301, a conduction mode of a pipeline assembly is adjusted to enrich liquid water only by a liquid enrichment assembly in response to a first water collection instruction. It can be understood that the enrichment of water molecules by the liquid enrichment assembly may be condensing water vapor in the air to form condensed water, or may be desublimating water vapor in the air to cause the water vapor to solidify to form frost, and then collecting and melting the frost can similarly obtain liquid water.

In step 302, the conduction mode of the pipeline assembly is adjusted to enrich the liquid water only by a condensation assembly in response to a second water collection instruction.

In step 303, the conduction mode of the pipeline assembly is adjusted to enrich the liquid water by the liquid enrichment assembly and the condensation assembly in response to a third water collection instruction.

According to the control method provided according to the embodiments of the present disclosure, different water collection instructions may be responded to. In the case of responding to the first water collection instruction, the liquid water is enriched only by the liquid enrichment assembly, air can be introduced from the outside, and the air can be in contact with the liquid enrichment assembly; the enrichment part of the liquid enrichment assembly can capture moisture or water vapor in the air, and then the regeneration part can release the enriched moisture and water vapor, such that the liquid collection assembly can collect the liquid water. In the case of responding to the second water collection instruction, the liquid water can be enriched only by the condensation assembly. The external air can also be introduced into the condensation assembly, the air exchanges heat with the condensation assembly at a lower temperature, the moisture in the air condenses at a low temperature to form a condensate or frost, and the condensate or the melted frost can be collected by the liquid collection assembly. In response to the third water collection instruction, the liquid water is enriched by the liquid enrichment assembly and the condensation assembly. The external air can also be first introduced into the liquid enrichment assembly, the moisture is enriched by the liquid enrichment assembly, and then the water content of the air discharged via the liquid enrichment assembly will increase, and this part of air can be discharged into the condensation assembly for further condensation. Based on this, the condensation assembly and the liquid enrichment assembly jointly produce liquid water, such that the generation efficiency of the liquid water is higher. Based on this, the air conditioner can be provided with different water collection methods. The liquid water can be collected in the air, and then the liquid water can be stored by the liquid collection assembly. When an electrical appliance, such as an air conditioner, needs to use the liquid water, the liquid water can be directly output via the liquid collection assembly without additionally filling water, and the user does not need to fill water, which can improve the user experience and ensure the smooth execution of the water-using function of the electrical appliance.

In one feasible embodiment, the step of adjusting the conduction mode of the pipeline assembly to enrich the liquid water only by the liquid enrichment assembly in response to the first water collection instruction includes: controlling a first control valve of the pipeline assembly to disconnect a path between an input pipeline and a moisture release pipeline, controlling a second control valve of the pipeline assembly to disconnect a path between an output pipeline and a moisture intake pipeline, and controlling the input pipeline and the output pipeline to open, such that the liquid enrichment assembly enriches water molecules; and controlling the moisture intake pipeline and the moisture release pipeline of the pipeline assembly to open, such that the liquid water is collected into the liquid collection assembly.

In this technical solution, the step of enriching the liquid water only by the liquid enrichment assembly is further provided. The external air is in contact with the liquid enrichment assembly through the input pipeline, and is then discharged via the output pipeline. In this process, the liquid enrichment assembly can capture the moisture and water vapor in the air. When liquid water enrichment is required, the airflow can be output through the moisture intake pipeline. The airflow flows through the liquid enrichment assembly and is then discharged via the moisture release pipeline. The discharged air can also carry a large amount of moisture, and this part of the moisture can be collected by the liquid enrichment assembly.

In one feasible embodiment, the step of adjusting the conduction mode of the pipeline assembly to enrich the liquid water only by the condensation assembly in response to the second water collection instruction includes: in response to the second water collection instruction, controlling a first control valve of the pipeline assembly to open a path between an input pipeline and a moisture release pipeline, controlling a second control valve of the pipeline assembly to open a path between an output pipeline and a moisture intake pipeline, and controlling a heat exchanger in communication with the liquid collection assembly to serve as an evaporator to form condensed water and/or frost; and collecting the condensed water and/or water resulting from the melting of the frost by the liquid collection assembly.

In this technical solution, the step of enriching the liquid water only by the condensation assembly is further provided. The condensation assembly can be turned on, such that the condensation assembly serves as an evaporator. Then, the external air enters the condensation assembly through the input pipeline and the moisture release pipeline, and the moisture condenses or frosts; then, the air is discharged out of the liquid water source collection apparatus through the moisture intake pipeline and the output pipeline, and the liquid after condensation or frosting can be collected by the liquid enrichment assembly.

In one feasible embodiment, the step of adjusting the conduction mode of the pipeline assembly to enrich the liquid water by the liquid enrichment assembly and the condensation assembly in response to the third water collection instruction includes: in response to the third water collection instruction, controlling, by the first control valve of the pipeline assembly, the input pipeline to be connected to both the output pipeline and the moisture release pipeline, and controlling, by the second control valve of the pipeline assembly, the output pipeline to be connected to both the input pipeline and the moisture intake pipeline; controlling a heat exchanger in communication with the liquid collection assembly to serve as an evaporator to form condensed water and/or frost, and enriching water molecules by the liquid enrichment assembly; and collecting the condensed water, water resulting from the melting of the frost, and regenerated water from the liquid enrichment assembly by the liquid collection assembly.

In this technical solution, the specific step of enriching the liquid water by the liquid enrichment assembly and the condensation assembly is further provided. External air is introduced via the input pipeline, and moisture and water vapor in the external air are captured by the liquid enrichment assembly and then flow out via the output pipeline. When the moisture is enriched, the airflow is output via the moisture intake pipeline, part of the airflow is discharged via the output pipeline, and part of the airflow enters the liquid enrichment assembly and carries the moisture and water vapor enriched onto the liquid enrichment assembly to enter the moisture release pipeline. Meanwhile, part of the airflow in the input pipeline also enters the moisture release pipeline and then enters the condensation assembly for condensation. Through condensation, a condensate or frost can be formed, and finally, the condensate and the melted frost are collected by the liquid collection assembly, such that the liquid water can be enriched. In this way, the distribution of the air pressure in the liquid water source collection apparatus is more balanced, further facilitating the production of liquid water.

In one feasible embodiment, the step of collecting the condensed water, the water resulting from the melting of the frost, and the regenerated water from the liquid enrichment assembly by the liquid collection assembly includes: upon formation of the frost on the evaporator, controlling controlling the first control valve to disconnect the path between the input pipeline and the moisture release pipeline, and controlling the second control valve to disconnect the path between the output pipeline and the moisture intake pipeline, and defrosting the evaporator by utilizing air flowing through the regeneration part.

In this technical solution, upon the formation of the frost on the evaporator, the first control valve may be controlled to disconnect the path between the input pipeline and the moisture release pipeline, and the second control valve may be controlled to disconnect the path between the output pipeline and the moisture intake pipeline, such that the moisture intake pipeline is connected to the moisture release pipeline, and the evaporator can be defrosted by utilizing the residual heat of the air flowing through the regeneration part, which is beneficial to the collection of the liquid water and can reduce the energy consumption.

In one feasible embodiment, the control method further includes: generating, based on a water usage demand, the first water collection instruction, the second water collection instruction, or the third water collection instruction; and/or generating, based on a water content of external air, the first water collection instruction, the second water collection instruction, or the third water collection instruction.

In this technical solution, the control method further includes selectively generating, based on the water usage demand, the first water collection instruction, the second water collection instruction, or the third water collection instruction; that is, a water collection instruction can be generated automatically based on the user's demand, making the water collection action capable of adapting to the water usage demand, such that the collection of liquid water better satisfies the user's demand.

In this technical solution, the control method can also selectively generate, based on the water content of external air, the first water collection instruction, the second water collection instruction, or the third water collection instruction; that is, a water collection instruction can be generated based on the content of moisture in external air, making the water collection action capable of adapting to the water content of external air, ensuring that sufficient liquid water can be produced.

It can be understood that the air conditioner is configured to adjust the temperature for an indoor space, and the water content of external air refers to the water content of outdoor air.

In one feasible embodiment, the step of generating, based on the water usage demand, the first water collection instruction, the second water collection instruction, or the third water collection instruction includes: generating the second water collection instruction in the case where the water usage demand is less than a first threshold; generating the first water collection instruction in the case where the water usage demand is greater than or equal to the first threshold and less than a second threshold; and generating the third water collection instruction in the case where the water usage demand is greater than or equal to the second threshold. A value of the first threshold is less than that of the second threshold.

In this technical solution, the step of generating a specific water collection instruction based on the water usage demand is further provided. If the water usage demand is less than the first threshold, it indicates that the requirement of the user or the air conditioner for the water usage amount is not high. In this case, the second water collection instruction can be generated, and the collection of liquid water is performed only by utilizing condensed water produced by the evaporator of the air conditioner. When the water usage demand is greater than or equal to the first threshold and less than the second threshold, it indicates that the requirement of the air conditioner or the user for the water usage amount is relatively high. In this case, the liquid enrichment assembly, the first pipeline assembly, and the second pipeline assembly of the liquid water source collection apparatus can be utilized to collect the liquid water, to meet the demand for the water usage amount. When the water usage amount is greater than or equal to the second threshold, it indicates that the water usage demand of the user or the air conditioner is very high. In this case, the third water collection instruction can be generated; moisture is first enriched by utilizing the liquid enrichment assembly of the liquid water source collection apparatus, and then collection of liquid water is performed by utilizing the evaporator of the air conditioner, thereby maximizing the enrichment efficiency of the liquid water and meeting the demand for the water usage amount.

In one feasible embodiment, the step of generating, based on the water content in the external air, the first water collection instruction, the second water collection instruction, or the third water collection instruction includes: generating the third water collection instruction in the case where the water content is less than a third threshold; generating the first water collection instruction in the case where the water content is greater than or equal to the third threshold and less than a fourth threshold; and generating the second water collection instruction in the case where the water content is greater than a fifth threshold. A value of the third threshold is less than that of the fourth threshold.

In this technical solution, the step of generating a specific water collection instruction based on the water content is further provided. If the water usage demand is less than the fourth threshold, it indicates that the water content in the outdoor air is very low. In this case, the third water collection instruction can be generated; moisture is first enriched by utilizing the liquid enrichment assembly of the liquid water source collection apparatus, and then collection of liquid water is performed by utilizing the evaporator of the air conditioner, thereby maximizing the enrichment efficiency of the liquid water and meeting the demand for the water usage amount. When the water content is greater than or equal to the fourth threshold and less than the fifth threshold, it indicates that there is a certain amount of water content in the external air. In this case, the liquid enrichment assembly, the first pipeline assembly, and the second pipeline assembly of the liquid water source collection apparatus can be utilized to collect the liquid water to meet the demand for the water usage amount. When the water content is greater than or equal to the fifth threshold, it indicates that the water content in the air is very high. In this case, the second water collection instruction can be directly generated; the collection of liquid water is performed only by utilizing condensed water produced by the evaporator of the air conditioner, which is sufficient to meet the water usage demand, and meanwhile, energy consumption can be reduced.

As shown in FIG. 9, according to a fourth aspect of the embodiments of the present disclosure, a computer-readable storage medium 401 is provided. The computer-readable storage medium 401 stores a computer program 402 to implement the control method according to any one of the above technical solutions.

The computer-readable storage medium 401 provided according to the embodiments of the present disclosure implements the control method according to any one of the above technical solutions. Therefore, the computer-readable storage medium 401 possesses all beneficial effects of the control method according to any one of the above technical solutions, which will not be repeated herein.

As shown in FIG. 10, according to a fifth aspect of the embodiments of the present disclosure, a control apparatus is provided. The control apparatus includes: a memory 501 storing a computer program; and a processor 502 running the computer program. The processor 502, when running the computer program, implements the control method according to any one of the above technical solutions.

The control apparatus provided according to the embodiments of the present disclosure implements the control method according to any one of the above technical solutions. Therefore, the control apparatus possesses all beneficial effects of the control method according to any one of the above technical solutions, which will not be repeated herein.

In the present disclosure, the terms "first", "second", and "third" are merely used for descriptive purposes, and shall not be understood as indicating or implying relative importance. The term "plurality of" means two or more, unless explicitly defined otherwise. The terms "mount", "interconnect", "connect", "fix", and the like should be interpreted in their broad senses. For example, "connect" may be a fixed connection, a detachable connection, or an integral connection, and "interconnect" may be a direct connection, or an indirect connection via an intermediate. For those of ordinary skill in the art, the specific meanings of the aforementioned terms in the present disclosure can be understood according to specific conditions.

In the description of the present disclosure, it should be understood that orientations or positional relationships indicated by terms such as "upper", "lower", "left", "right", "front", and "rear" are those shown based on the drawings, and are merely intended to facilitate and simplify description of the present disclosure rather than to indicate or imply that the indicated apparatus or unit must have a specific direction and be structured and operated according to the specific orientation, and should not be construed as limiting the present disclosure.

In the description of the specification, the description of terms "one embodiment", "some embodiments", "a specific embodiment", and the like means that specific features, structures, materials, or characteristics described in connection with the embodiments or examples are included in at least one embodiment or example of the present disclosure. In the specification, the schematic description of the aforementioned terms does not necessarily refer to the same embodiment or example. Moreover, the specific features, structures, materials, or characteristics described may be combined in a suitable manner in any one or more embodiments or examples.

The above are only preferred embodiments of the present disclosure and are not intended to limit the present disclosure. For those skilled in the art, the present disclosure can be modified and varied. Any modification, equivalent substitution, improvement, and the like made within the spirit and principle of the present disclosure shall all fall within the protection scope of the present disclosure.

## Claims

1. A liquid water source collection apparatus, wherein the liquid water source collection apparatus comprises:
a liquid enrichment assembly, the liquid enrichment assembly comprising an enrichment part and a regeneration part;
a condensation assembly and a pipeline assembly, the pipeline assembly connecting the liquid enrichment assembly and the condensation assembly; and
a liquid collection assembly, the liquid collection assembly being in communication with the condensation assembly and/or the liquid enrichment assembly.

2. The liquid water source collection apparatus according to claim 1, wherein the pipeline assembly comprises:
an input pipeline in communication with the liquid enrichment assembly and disposed upstream of an airflow of the enrichment part;
an output pipeline in communication with the liquid enrichment assembly and disposed downstream of the airflow of the enrichment part;
a moisture intake pipeline in communication with the condensation assembly and disposed upstream of an airflow of the regeneration part;
a moisture release pipeline, one end of the moisture release pipeline being in communication with the liquid enrichment assembly and disposed downstream of the airflow of the regeneration part, and the other end of the moisture release pipeline being in communication with the condensation assembly;
a first control valve, the first control valve being configured to communicate the input pipeline with the moisture release pipeline; and
a second control valve, the second control valve being configured to communicate the output pipeline with the moisture intake pipeline.

3. The liquid water source collection apparatus according to claim 2, wherein the liquid enrichment assembly further comprises:
a first air supply member disposed within the input pipeline and/or the output pipeline and configured to cause air to flow through the enrichment part of the liquid enrichment assembly; and
a second air supply member disposed within the moisture intake pipeline and/or the moisture release pipeline and configured to cause air to flow through the regeneration part of the liquid enrichment assembly.

4. The liquid water source collection apparatus according to claim 2, wherein
the first control valve is further configured to adjust an opening degree between the input pipeline and the moisture release pipeline; and
the second control valve is further configured to adjust an opening degree between the output pipeline and the moisture intake pipeline.

5. The liquid water source collection apparatus according to claim 1, wherein the liquid enrichment assembly comprises:
a first housing, with the enrichment part and the regeneration part formed on the first housing;
a moisture adsorption member disposed within the first housing; and
a regeneration member configured to supply energy to the regeneration part to desorb water molecules.

6. The liquid water source collection apparatus according to claim 5, wherein the liquid enrichment assembly comprises: an enrichment member configured to supply energy to the enrichment part;
the enrichment member comprises at least one of a phase change heat exchanger, a Peltier effect heat exchanger, a fan, a liquid cooling heat exchanger, and a vortex tube; and/or
the regeneration member comprises at least one of: thermal radiation, a hot end of a heat pump, a hot end of a heat pipe, and a solar heat source; and/or the liquid enrichment assembly further comprises:
a driving member connected to the moisture adsorption member and configured to drive the moisture adsorption member to rotate.

7. The liquid water source collection apparatus according to claim 1, wherein
the liquid collection assembly is configured to be connected to a water-using apparatus, and the water-using apparatus comprises a humidification component and/or a cleaning component.

8. The liquid water source collection apparatus according to any one of claims 1 to 7, wherein the condensation assembly comprises:
a liquid collection heat exchanger, the liquid collection heat exchanger being configured to form condensed water and/or frost, and the liquid collection assembly collects, through an input end, the condensed water and/or liquid formed by melting of the frost.

9. The liquid water source collection apparatus according to claim 8, wherein the condensation assembly further comprises:
a second housing, the liquid collection heat exchanger being disposed within the second housing, the second housing being configured to collect the condensed water and/or the liquid formed by the melting of the frost, the input end of the liquid collection assembly being in communication with the second housing, and the pipeline assembly being in communication with the second housing.

10. An air conditioner, wherein the air conditioner comprises:
the liquid water source collection apparatus according to any one of claims 1 to 9.

11. The air conditioner according to claim 10, wherein the air conditioner further comprises:
an indoor heat exchanger;
a compressor, the compressor being connected to the indoor heat exchanger;
an outdoor heat exchanger, the outdoor heat exchanger being connected to the compressor;
a first throttling assembly, the throttling assembly being separately connected to the outdoor heat exchanger and the indoor heat exchanger; and
a first refrigerant pipeline, the refrigerant pipeline being in communication with the indoor heat exchanger, the compressor, the outdoor heat exchanger, and the first throttling assembly to form a refrigerant circulation.

12. The air conditioner according to claim 11, wherein
the pipeline assembly is in communication with at least one of the indoor heat exchanger and the outdoor heat exchanger, and at least one of the indoor heat exchanger and the outdoor heat exchanger serves as a liquid collection heat exchanger of the condensation assembly; and
in a case where the pipeline assembly is in communication with the outdoor heat exchanger and the indoor heat exchanger, the liquid collection assembly comprises a first water tank and a second water tank, the first water tank is in communication with the outdoor heat exchanger, and the second water tank is in communication with the indoor heat exchanger.

13. The air conditioner according to claim 11, wherein the air conditioner further comprises:
a second refrigerant pipeline, the second refrigerant pipeline being in communication with the condensation assembly, one end of the second refrigerant pipeline being in communication with the indoor heat exchanger, and the other end of the second refrigerant pipeline being in communication with the compressor, such that the liquid collection heat exchanger of the condensation assembly is connected in parallel with the outdoor heat exchanger;
a second throttling assembly, the second throttling assembly being separately connected to the indoor heat exchanger and the liquid collection heat exchanger; and/or,
a third air supply member, the third air supply member being configured to supply air to the condensation assembly.

14. The air conditioner according to claim 11, wherein the air conditioner further comprises:
a third refrigerant pipeline, the third refrigerant pipeline being in communication with the condensation assembly, one end of the third refrigerant pipeline being in communication with the first throttling assembly, and the other end of the third refrigerant pipeline being in communication with the indoor heat exchanger;
a third control valve, the third control valve being disposed on the third refrigerant pipeline; and/or
a fourth air supply member, the fourth air supply member being configured to supply air to the liquid collection heat exchanger of the condensation assembly.

15. The air conditioner according to claim 11, wherein the air conditioner further comprises:
a third housing, the outdoor heat exchanger, the compressor, and the liquid collection assembly being disposed within the third housing.

16. The air conditioner according to any one of claims 10 to 15, wherein the air conditioner further comprises:
a humidifier, the liquid collection assembly being in communication with the humidifier,
wherein the humidifier comprises a curtain body, and the liquid collection assembly is configured to output liquid to the curtain body.

17. The air conditioner according to any one of claims 10 to 15, wherein the air conditioner further comprises:
an outdoor unit housing, the liquid enrichment assembly and the outdoor heat exchanger being disposed within the outdoor unit housing;
an indoor unit housing, the indoor heat exchanger being disposed within the indoor unit housing; and
a fresh air module, an air intake port of the fresh air module being in communication with a first air inlet of the outdoor unit housing, and an output end of the fresh air module being connected to a second air inlet of the indoor unit housing.

18. The air conditioner according to claim 17, wherein the fresh air module further comprises:
an oxygen production module and an absorption module, the oxygen production module and the absorption module being disposed within a housing of the fresh air module.

19. The air conditioner according to claim 17, wherein the air conditioner further comprises:
a filter module, the filter module being configured to filter air entering at least one of the liquid water source collection apparatus, the outdoor unit housing, and the indoor unit housing; and
a cleaning module, an output end of the liquid collection assembly being in communication with the cleaning module, and the cleaning module being configured to clean the filter module.

20. The air conditioner according to claim 19, wherein the filter module comprises:
a first filter member configured to be disposed at the air inlet of the outdoor unit housing;
a second filter member configured to be disposed at an air inlet of the fresh air module; or
a third filter member configured to cover both the fresh air module and the first air inlet of the outdoor unit housing.

21. The air conditioner according to claim 20, wherein the filter module further comprises:
a fourth filter member configured to be disposed at the air inlet of the indoor unit housing; and
fifth filter members configured to be disposed at inlets of the moisture intake pipeline and the moisture release pipeline of the pipeline assembly; and
the cleaning module is configured to clean at least one of the first filter member, the second filter member, the third filter member, the fourth filter member, and the fifth filter member.

22. A control method, wherein the control method is used to control the air conditioner according to any one of claims 10 to 21, and the control method comprises:
adjusting a conduction mode of the pipeline assembly to enrich liquid water only by a liquid enrichment assembly in response to a first water collection instruction;
adjusting the conduction mode of the pipeline assembly to enrich the liquid water only by a condensation assembly in response to a second water collection instruction; and
adjusting the conduction mode of the pipeline assembly to enrich the liquid water by the liquid enrichment assembly and the condensation assembly in response to a third water collection instruction.

23. The control method according to claim 22, wherein the step of adjusting the conduction mode of the pipeline assembly to enrich the liquid water only by the liquid enrichment assembly in response to the first water collection instruction comprises:
controlling a first control valve of the pipeline assembly to disconnect a path between an input pipeline and a moisture release pipeline, controlling a second control valve of the pipeline assembly to disconnect a path between an output pipeline and a moisture intake pipeline, and controlling the input pipeline and the output pipeline to open, such that the liquid enrichment assembly enriches water molecules; and
controlling the moisture intake pipeline and the moisture release pipeline of the pipeline assembly to open, such that the liquid water is collected into the liquid collection assembly.

24. The control method according to claim 22, wherein the step of adjusting the conduction mode of the pipeline assembly to enrich the liquid water only by the condensation assembly in response to the second water collection instruction comprises:
in response to the second water collection instruction, controlling a first control valve of the pipeline assembly to open a path between an input pipeline and a moisture release pipeline, controlling a second control valve of the pipeline assembly to open a path between an output pipeline and a moisture intake pipeline, and controlling a heat exchanger in communication with the liquid collection assembly to serve as an evaporator to form condensed water and/or frost; and
collecting, by the liquid collection assembly, the condensed water and/or water resulting from melting of the frost.

25. The control method according to claim 22, wherein the step of adjusting the conduction mode of the pipeline assembly to enrich the liquid water by the liquid enrichment assembly and the condensation assembly in response to the third water collection instruction comprises:
in response to the third water collection instruction, controlling, by a first control valve of the pipeline assembly, an input pipeline to be connected to both an output pipeline and a moisture release pipeline, and controlling, by a second control valve of the pipeline assembly, the output pipeline to be connected to both the input pipeline and a moisture intake pipeline;
controlling a heat exchanger in communication with the liquid collection assembly to serve as an evaporator to form condensed water and/or frost, and enriching water molecules by the liquid enrichment assembly; and
collecting the condensed water, water resulting from melting of the frost, and regenerated water from the liquid enrichment assembly by the liquid collection assembly.

26. The control method according to claim 25, wherein the step of collecting the condensed water, the water resulting from the melting of the frost, and the regenerated water from the liquid enrichment assembly by the liquid collection assembly comprises:
upon formation of the frost on the evaporator, controlling controlling the first control valve to disconnect a path between the input pipeline and the moisture release pipeline, and controlling the second control valve to disconnect a path between the output pipeline and the moisture intake pipeline, and defrosting the evaporator by utilizing air flowing through the regeneration part.

27. The control method according to any one of claims 22 to 26, wherein the control method further comprises:
generating, based on a water usage demand, the first water collection instruction, the second water collection instruction, or the third water collection instruction; and/or
generating, based on a water content of external air, the first water collection instruction, the second water collection instruction, or the third water collection instruction.

28. The control method according to claim 27, wherein
the step of generating, based on the water usage demand, the first water collection instruction, the second water collection instruction, or the third water collection instruction comprises:
generating the second water collection instruction in a case where the water usage demand is less than a first threshold;
generating the first water collection instruction in a case where the water usage demand is greater than or equal to the first threshold and less than a second threshold; and
generating the third water collection instruction in a case where the water usage demand is greater than or equal to the second threshold,
wherein a value of the first threshold is less than that of the second threshold; and
the step of generating, based on the water content of the external air, the first water collection instruction, the second water collection instruction, or the third water collection instruction comprises:
generating the third water collection instruction in a case where the water content is less than a third threshold;
generating the first water collection instruction in a case where the water content is greater than or equal to the third threshold and less than a fourth threshold; and
generating the second water collection instruction in a case where the water content is greater than a fifth threshold,
wherein a value of the third threshold is less than that of the fourth threshold.

29. A computer-readable storage medium, wherein
the computer-readable storage medium stores a computer program to implement the control method according to any one of claims 22 to 28.

30. A control apparatus, wherein the control apparatus comprises:
a memory storing a computer program; and
a processor executing the computer program,
wherein the processor, when executing the computer program, implements the control method according to any one of claims 22 to 28.
